(19) Europäisches Patentamt / European Patent Office / Office européen des brevets

(11) **EP 3 427 975 B1**

(12) **EUROPÄISCHE PATENTSCHRIFT**

(45) Veröffentlichungstag und Bekanntmachung des Hinweises auf die Patenterteilung:
**12.08.2020   Patentblatt 2020/33**

(51) Int Cl.:
**B60C 1/00** *(2006.01)*        **C08K 3/04** *(2006.01)*

(21) Anmeldenummer: **18171979.0**

(22) Anmeldetag: **14.05.2018**

(54) **KAUTSCHUKMISCHUNG FÜR DIE INNENSCHICHT ODER DEN SCHLAUCH VON FAHRZEUGLUFTREIFEN UND FAHRZEUGLUFTREIFEN**

RUBBER COMPOSITION FOR THE INNER LAYER OR THE HOSE OF PNEUMATIC VEHICLE TYRES AND PNEUMATIC VEHICLE TYRES

MÉLANGE DE CAOUTCHOUC POUR LA COUCHE INTÉRIEURE OU LA CHAMBRE DE PNEUMATIQUE DE VÉHICULE ET PNEUMATIQUE DE VÉHICULE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **12.07.2017   DE 102017211926**

(43) Veröffentlichungstag der Anmeldung:
**16.01.2019   Patentblatt 2019/03**

(73) Patentinhaber: **Continental Reifen Deutschland GmbH**
**30165 Hannover (DE)**

(72) Erfinder:
• **Müller, Matthias-Stephan**
  **30827 Garbsen (DE)**
• **Efimov, Konstantin**
  **30453 Hannover (DE)**
• **Jeromin, Dieter**
  **30419 Hannover (DE)**

(74) Vertreter: **Finger, Karsten et al**
**Continental Aktiengesellschaft**
**Patente und Lizenzen**
**Postfach 169**
**30001 Hannover (DE)**

(56) Entgegenhaltungen:
**WO-A1-2016/016869        US-A1- 2010 249 353
US-A1- 2013 281 581**

• **DATABASE WPI Week 201444 Thomson Scientific, London, GB; AN 2014-M70811 XP002786440, & CN 103 772 779 A (JIAN Y) 7. Mai 2014 (2014-05-07)**
• **Black Bear Carbon: "Introducing BBC 500", Internet , 14. Februar 2013 (2013-02-14), XP002786441, Gefunden im Internet: URL:https://www.google.com/url?sa=t&rct=j& q=&esrc=s&source=web&cd=8&ved=2ahUKEwj -t_D 8tNHeAhXGjqQKHXA6DD0QFjAHegQIARAC&ur l=http %3A%2F%2Fwww.vkrt.org%2Flect.php%3Fsel% 3Da dmin%2Fupload%2F20120214CT.pdf&usg=AOv Vaw2 ZLCM6v9OoxRLb08L4avn6 [gefunden am 2018-11-13]**

**Beschreibung**

Die Erfindung betrifft eine Kautschukmischung für die Innenschicht oder den Schlauch von Fahrzeugluftreifen und einen Fahrzeugluftreifen.

Die Luftdichtigkeit von Fahrzeugluftreifen wird üblicherweise über eine Kautschukmischung enthaltend Butyl-Kautschuk und/oder Halobutyl-Kautschuk bestimmt. Derartige Kautschuke im Reifen haben allerdings den Nachteil, dass Regenerate, die aus dem Reifen hergestellt werden, meist nach den Kautschuktypen getrennt werden müssen, da es unerwünscht wäre, ein Butyl-Kautschuk-Regenerat einer Laufstreifenmischung zuzusetzen.

Ferner ist es bekannt, derartigen Kautschukmischungen weitere Bestandteile, insbesondere Füllstoffe, zuzugeben, die die Luftdichtigkeit und/oder andere physikalische Eigenschaften im Zielkonflikt mit der Luftdichtigkeit weiter verbessern.
So offenbart die WO 2010034592 A1 eine Kautschukmischung für die Innenschicht von schlauchlosen Fahrzeugluftreifen, die u.a. Halobutyl-Kautschuk und als Füllstoff eine mineralische Verbindung, wie Talk oder Kaolin, enthält. Derartige Kautschukmischungen zeigen eine verbesserte Luftdichtigkeit.

Die US 20130281581 A1 offenbart ein Polymer-Komposit enthaltend pyrolysierten Ruß. Ferner wird darin eine Kautschukmischung für den Innerliner von Fahrzeugluftreifen auf Basis von 100 phr Halobutylkautschuk offenbart, welche pyrolysierten Ruß enthält.

Die CN 103772779 A offenbart eine Reifenmischung enthaltend Pyrolyse-Ruß und epoxidierten Naturkautschuk.

Die US 20100249353 A1 offenbart ein Verfahren zum Recycling von Kautschuk, wobei als ein Verfahrensprodukt Pyrolyse-Ruß anfällt. Ferner wird darin eine Kautschukmischung enthaltend Naturkautschuk und Pyrolyse-Ruß offenbart, wobei der Pyrolyse-Ruß der einzige Füllstoff ist.

Dem Internetauftritt der Black Bear Carbon vom 14.02.2013 sind in dem dort aufgefundenen Dokument "Introducing BBC 500" Kautschukmischungen auf Basis von 100 phr EPDM oder 100 phr SBR zu entnehmen, die Pyrolyse-Ruß enthalten.

Der vorliegenden Erfindung liegt die Aufgabe zugrunde, eine Kautschukmischung für die Innenschicht oder den Schlauch eines Fahrzeugluftreifens bereitzustellen, die hinsichtlich Nachhaltigkeit und Umweltfreundlichkeit optimiert ist und einfacher und kostengünstiger herzustellen ist, wobei die Luftdichtigkeit zumindest nicht signifikant verschlechtert werden soll.

Gelöst wird diese Aufgabe erfindungsgemäß dadurch, dass die Kautschukmischung für die Innenschicht oder den Schlauch von Fahrzeugluftreifen folgende Bestandteile enthält:

- wenigstens 50 phr wenigstens eines Polyisoprens, welches ausgewählt ist aus natürlichem und synthetischem Polyisopren; und
- ein Füllstoffsystem mit 50 bis 95 Gew.-% wenigstens eines Pyrolyse-Rußes und 5 bis 45 Gew.-% wenigstens eines anorganischen Füllstoffs als Anteile an der Gesamtmenge an enthaltenen Füllstoffen, wobei der Pyrolyse-Ruß einen Aschegehalt von 5 bis 30 Gew.-% aufweist, und wobei der anorganische Füllstoff ein inaktiver Füllstoff ist, der ausgewählt ist aus der Gruppe bestehend aus Calciumcarbonat oder plättchenförmigen Füllstoffen ausgewählt aus der Gruppe bestehend aus Talk und Kaolin, wobei auch ein Gemisch aus mehreren der genannten Füllstoffe denkbar ist;
- und wobei die Kautschukmischung frei ist von Butyl-Kautschuk und frei ist von Halobutyl-Kautschuk.

Überraschenderweise wurde gefunden, dass die erfindungsgemäße Kautschukmischung im Vergleich zum Stand der Technik durch die Kombination der genannten Bestandteile eine sehr gute Haltbarkeit aufweist ohne dass die Luftdichtigkeit signifikant negativ beeinträchtigt wird, wobei die Kautschukmischung insbesondere im Hinblick auf die Anwendung in einem Reifen oder einem Schlauch hinsichtlich Nachhaltigkeit und Umweltfreundlichkeit optimiert ist. Gleichzeitig lässt sich die erfindungsgemäße Kautschukmischung aufgrund der optimierten Viskositätseigenschaften im Fertigungsprozess besser verarbeiten. Zudem ergibt sich eine einfachere Herstellbarkeit dadurch, dass mit der vergleichsweise hohen Menge an Pyrolyse-Ruß überraschenderweise der Anteil an anorganischen Füllstoffen, wie Kieselsäure oder inaktiven anorganischen Füllstoffe wie Kaolin oder vergleichbaren Füllstoffen oder Calciumcarbonat, reduziert werden kann. Insbesondere bei Verringerung der Menge an anorganischen inaktiven Füllstoffen, wie Kaolin oder vergleichbaren Füllstoffen oder Calciumcarbonat, ergeben sich Vorteile bei der Herstellung der Kautschukmischung, da die üblichen Probleme mit derartigen Füllstoffen verringert werden können, insbesondere und z. B. da sich so gut wie keine Blasenbildung in der Mischung ergibt. Gleichzeitig weist die Kautschukmischung eine geringere Dichte auf. Dies trägt dazu bei, dass ein Fahrzeugreifen, der die Kautschukmischung aufweist, einen geringeren und damit verbesserten Rollwiderstand aufweist. Die für die Anwendung in der Innenschicht oder im Schlauch eines Reifens wichtige Eigenschaft der Luftdichtigkeit bleibt dabei auf einem vergleichbaren Niveau. Zudem ergeben sich durch den Einsatz von Pyrolyse-Ruß und damit einem recycelten Material ökologische Vorteile. Durch die Verwendung von natürlichem und/oder synthetischem Polyisopren und den Verzicht auf Butyl- und Halo-Butylkautschuk ist diese Kautschukmischung besser für Regenerate wiederverwendbar, was den Recycling-Prozess von Altreifen erleichtert.

Unter Fahrzeugluftreifen werden im Rahmen der vorliegenden Erfindung sowohl schlauchlose Fahrzeugluftreifen mit einer Innenschicht (oder auch Innenseele oder Innerliner genannt) als auch Fahrzeugluftreifen mit einem Schlauch verstanden. Hierbei sind alle dem Fachmann bekannten Fahrzeugluftreifen umfasst, wie insbesondere PKW-Reifen, LKW-Reifen, Zweiradreifen.

Fahrzeugluftreifen, die mit einem Schlauch versehen sind, werden im Rahmen der vorliegenden Erfindung auch als Schlauchreifen bezeichnet.

Ein weiterer Gegenstand der vorliegenden Erfindung ist ein Fahrzeugluftreifen, der wenigstens eine erfindungsgemäße Kautschukmischung aufweist. Der erfindungsgemäße Fahrzeugluftreifen weist eine sehr gute Haltbarkeit auf und ist hinsichtlich Nachhaltigkeit und Umweltfreundlichkeit optimiert sowie einfacher und kostengünstiger herstellbar bei einer vergleichbaren Luftdichtigkeit, wenn er die oben beschriebene erfindungsgemäße Kautschukmischung in wenigstens einem Bauteil, insbesondere wenigstens einem inneren Bauteil, aufweist.

Bevorzugt weist der Fahrzeugluftreifen die Kautschukmischung im Fall eines schlauchlosen Reifens in der Innenschicht oder im Fall eines Schlauchreifens im Schlauch auf.

Es ist aber auch denkbar, dass der Fahrzeugluftreifen die Kautschukmischung sowohl in der Innenschicht aufweist, als auch zudem in einem Schlauch.

Für die weiteren Vorteile wird an dieser Stelle auf die Ausführungen zu der erfindungsgemäßen Kautschukmischung verwiesen.

Gemäß einer bevorzugten Ausführungsform der Erfindung handelt es sich um einen schlauchlosen Fahrzeugluftreifen, der wenigstens eine erfindungsgemäße Kautschukmischung wenigstens in der Innenschicht aufweist.

Gemäß einer weiteren bevorzugten Ausführungsform der Erfindung handelt es sich um einen Schlauchreifen, der wenigstens eine erfindungsgemäße Kautschukmischung wenigstens im Schlauch aufweist.

Gegenstand der vorliegenden Erfindung ist ebenfalls ein Schlauch zur Verwendung in einem Schlauchreifen, der wenigstens eine erfindungsgemäße Kautschukmischung inklusive bevorzugter Ausführungsformen enthält.

Weitere Anwendung findet die erfindungsgemäße Kautschukmischung in der Mischungsentwicklung für Riemen, Gurte, insbesondere für Fördergurte, und sonstige Schläuche.

Im Folgenden werden die Bestandteile der erfindungsgemäßen Kautschukmischung näher ausgeführt. Sämtliche Ausführungen gelten auch für den erfindungsgemäßen Fahrzeugluftreifen, der die erfindungsgemäße Kautschukmischung bevorzugt in wenigstens einem inneren Bauteil, besonders bevorzugt in der Innenschicht oder im Schlauch, aufweist.

Die in dieser Schrift verwendete Angabe phr (parts per hundred parts of rubber by weight) ist dabei die in der Kautschukindustrie übliche Mengenangabe für Mischungsrezepturen. Die Dosierung der Gewichtsteile der einzelnen Substanzen wird dabei stets auf 100 Gewichtsteile der gesamten Masse aller in der Mischung vorhandenen Kautschuke bezogen.

Die Angabe "Gew.-% als Anteil an der Gesamtmenge an enthaltenen Füllstoffen" bedeutet, dass die Summen der Mengen an enthaltenen Füllstoffen 100 Gew.-% ergeben und der Anteil eines spezifischen Füllstoffs daran in Gew.-% angegeben wird. Zu den Füllstoffen zählen hierbei Pyrolyse-Ruße (als erfindungsgemäßer Hauptbestandteil des Füllstoffsystems) sowie anorganische Füllstoffe und etwaige vorhandene Industrieruße.

Anorganische Füllstoffe umfassen inaktive anorganische Füllstoffe und aktive Füllstoffe, wie insbesondere Kieselsäuren.

Inaktive anorganische Füllstoffe sind insbesondere Kaolin oder vergleichbare plättchenförmige Füllstoffe oder Calciumcarbonat.

Erfindungsgemäß enthält die Kautschukmischung ein Füllstoffsystem mit wenigstens einem anorganischen Füllstoff, wobei der anorganische Füllstoff ein inaktiver Füllstoff ist, der ausgewählt ist aus der Gruppe bestehend aus Calciumcarbonat oder plättchenförmigen Füllstoffen ausgewählt aus der Gruppe bestehend aus Talk und Kaolin, wobei auch ein Gemisch aus mehreren der genannten Füllstoffe denkbar ist.

Zudem können Industrieruße oder auch sonstige denkbare Füllstoffe wie Carbon nanotubes (CNT) oder Titandioxid, s. unten, enthalten sein, solange das Füllstoffsystem 5 bis 45 Gew.-% wenigstens eines anorganischen Füllstoffs als Anteile an der Gesamtmenge an enthaltenen Füllstoffen enthält, wobei der anorganische Füllstoff ein inaktiver Füllstoff ist, der ausgewählt ist aus der Gruppe bestehend aus Calciumcarbonat oder plättchenförmigen Füllstoffen ausgewählt aus der Gruppe bestehend aus Talk und Kaolin, wobei auch ein Gemisch aus mehreren der genannten Füllstoffe denkbar ist.

Zinkoxid zählt im Rahmen der vorliegenden Erfindung nicht zu den Füllstoffen, d. h. dass die Menge an evtl. enthaltenem Zinkoxid nicht zu den 100 Gew.-% des Füllstoffsystems beiträgt.

Die erfindungsgemäße Kautschukmischung ist frei von Butyl-Kautschuk und frei von Halobutyl-Kautschuk, d. h. sie enthält jeweils 0 phr der genannten Kautschuke. Hierunter fallen alle dem Fachmann bekannten Typen, wobei als Halobutyl-Kautschuk insbesondere Chlorobutyl-Kautschuk und Bromobutyl-Kautschuk bekannt sind.

Hierdurch wird die erfindungsgemäße Aufgabe hinsichtlich Nachhaltigkeit optimal gelöst, da gar kein Butyl- oder Halobutyl-Kautschuk enthalten ist, der bei der Wiederaufbereitung der Kautschukmischung in einem Altreifen als Verunreinigung auftreten kann.

Die erfindungsgemäße Kautschukmischung enthält wenigstens 50 phr wenigstens eines Polyisoprens, welches ausgewählt ist aus natürlichem und synthetischem Polyisopren.

Bei dem wenigstens einen Polyisopren kann es sich somit um ein natürliches Polyisopren (NR, Naturkautschuk) und/oder ein synthetisches Polyisopren (IR) handeln.

Bei sämtlichen Ausführungsformen kann es sich sowohl um cis-1,4-Polyisopren als auch um 3,4-Polyisopren handeln. Bevorzugt ist allerdings die Verwendung von cis-1,4-Polyisoprenen mit einem cis 1,4 Anteil > 90 Gew.-%. Zum einen kann solch ein Polyisopren durch stereospezifische Polymerisation in Lösung mit Ziegler-Natta-Katalysatoren oder unter Verwendung von fein verteilten Lithiumalkylen erhalten werden. Zum anderen handelt es sich bei Naturkautschuk (NR) um ein solches cis-1,4 Polyisopren, der cis-1,4-Anteil im Naturkautschuk ist größer 99 Gew.-%.

Ferner ist auch ein Gemisch eines oder mehrerer natürlicher Polyisoprene mit einem oder mehreren synthetischen Polyisopren(en) denkbar.

Die Gesamtmenge an natürlichem und/oder synthetischem Polyisopren beträgt bevorzugt 50 bis 100 phr, besonders bevorzugt 55 bis 100 phr, ganz besonders bevorzugt 60 bis 100 phr, wiederum bevorzugt 60 bis 100 phr, wiederum ganz besonders bevorzugt 70 bis 100 phr. Hierdurch weist die Kautschukmischung eine besonders gute Haltbarkeit und gute Reißeigenschaften auf. Zudem lässt sie sich gut prozessieren. Ein Fahrzeugluftreifen, der die Kautschukmischung in der Innenschicht aufweist, lässt sich beispielsweise einfacher und verbessert herstellen, da die Innenschicht mit einer hohen Menge an Polyisopren eine gute Klebrigkeit aufweist. Dadurch können die Enden des Innenschichtstreifens beim Auflegen in den Reifen auf Stoß geklebt werden. Hierdurch wird im Gegensatz zu einer Innenschicht, die weniger NR und/oder IR enthält, also z. B. überwiegend oder vollständig auf Butyl- oder Halobutyl-Kautschuk basiert, der Überlapp am Splice und damit Materialgewicht und Umwucht vermieden.

Für den Fall, dass die Kautschukmischung weniger als 100 phr, also beispielsweise 70 bis 99,9 phr NR und/oder IR enthält, ist wenigstens ein weiterer Kautschuk in der Kautschukmischung enthalten, sodass die Gesamtmenge an enthaltenen Kautschuken 100 phr beträgt.

Der weitere Kautschuk ist bevorzugt ein Dienkautschuk, der bevorzugt ausgewählt ist aus der Gruppe bestehend aus epoxidiertem Naturkautschuk (ENR) und/oder Styrol-Butadien-Copolymer und/oder Butadien-Kautschuk (BR) und/oder Styrol-Isopren-Copolymer und/oder Styrol-Isopren-Butadien-Terpolymer und/oder Ethylen-Propylen-Dienkautschuk, wobei der weitere Dienkautschuk modifiziert sein kann.

Bei der Modifizierung kann es sich um solche mit Hydroxy-Gruppen und/oder Ethoxy-Gruppen und/oder Epoxy-Gruppen und/oder Siloxan-Gruppen und/oder Amino-Gruppen und/oder Aminosiloxan und/oder Carboxy-Gruppen und/oder Phthalocyanin-Gruppen und/oder Silan-Sulfid-Gruppen handeln. Es kommen aber auch weitere, der fachkundigen Person bekannte, Modifizierungen, auch als Funktionalisierungen bezeichnet, in Frage. Bestandteil solcher Funktionalisierungen können Metallatome sein.

Insbesondere Styrol-Isopren-Butadien-Terpolymer oder Ethylen-Propylen-Dien-Kautschuk kommen bei der Herstellung von technischen Gummiartikeln, wie Gurte, Riemen und Schläuche, zum Einsatz.

Besonders bevorzugt ist der wenigstens eine weitere Kautschuk ausgewählt aus der Gruppe bestehend aus Styrol-Butadien-Copolymer (SBR) und/oder Butadien-Kautschuk (BR).

Falls in der erfindungsgemäßen Kautschukmischung Butadien-Kautschuk (= BR, Polybutadien) enthalten ist, kann es sich um alle dem Fachmann bekannten Typen handeln. Darunter fallen u.a. die sogenannten high-cis- und low-cis-Typen, wobei Polybutadien mit einem cis-Anteil größer oder gleich 90 Gew.-% als high-cis-Typ und Polybutadien mit einem cis-Anteil kleiner als 90 Gew.-% als low-cis-Typ bezeichnet wird. Ein low-cis-Polybutadien ist z.B. Li-BR (Lithium-katalysierter Butadien-Kautschuk) mit einem cis-Anteil von 20 bis 50 Gew.-%. Mit einem high-cis BR werden besonders gute Abriebeigenschaften sowie eine niedrige Hysterese der Kautschukmischung erzielt.

Das oder die eingesetzte(n) Polybutadiene kann/können mit Modifizierungen und Funktionalisierungen endgruppenmodifiziert und/oder entlang der Polymerketten funktionalisiert sein. Bei der Modifizierung kann es sich um solche mit Hydroxy-Gruppen und/oder Ethoxy-Gruppen und/oder Epoxy-Gruppen und/oder Siloxan-Gruppen und/oder Amino-Gruppen und/oder Aminosiloxan und/oder Carboxy-Gruppen und/oder Phthalocyanin-Gruppen und/oder Silan-Sulfid-Gruppen handeln. Es kommen aber auch weitere, der fachkundigen Person bekannte, Modifizierungen, auch als Funktionalisierungen bezeichnet, in Frage. Bestandteil solcher Funktionalisierungen können Metallatome sein.

Für den Fall, dass wenigstens ein Styrol-Butadien-Kautschuk (Styrol-Butadien-Copolymer) in der Kautschukmischung enthalten ist, kann es sich sowohl um lösungspolymerisierten Styrol-Butadien-Kautschuk (SSBR) als auch um emulsionspolymerisierten Styrol-Butadien-Kautschuk (ESBR) handeln, wobei auch ein Gemisch aus wenigstens einem SSBR und wenigstens einem ESBR eingesetzt werden kann. Die Begriffe "Styrol-Butadien-Kautschuk" und "Styrol-Butadien-Copolymer" werden im Rahmen der vorliegenden Erfindung synonym verwendet.

Das eingesetzte Styrol-Butadien-Copolymer kann mit den oben beim Polybutadien genannten Modifizierungen und Funktionalisierungen endgruppenmodifiziert und/oder entlang der Polymerketten funktionalisiert sein.

Die erfindungsgemäße Kautschukmischung enthält wenigstens einen Pyrolyse-Ruß als Hauptbestandteil des enthaltenen Füllstoffsystems, wie oben ausgeführt. Der Pyrolyse-Ruß ist dabei bevorzugt mittels Pyrolyse aus Altreifen und/oder vulkanisierten Produktionsabfällen aus der Reifenherstellung und/oder vulkanisierten Schläuchen hergestellt. Besonders bevorzugt wurde der Pyrolyseruß aus Altreifen und/oder Schläuchen hergestellt, ganz besonders bevorzugt aus Altreifen.

Bei vulkanisierten Produktionsabfällen aus der Reifenherstellung kann es sich um alle denkbaren vulkanisierten Kautschukmischungen für Fahrzeugreifen handeln, die Kautschukmischungen im Verbund mit Festigkeitsträgern einschließen.

Pyrolyse-Ruß ist dem Fachmann bekannt. Er wird wie beispielsweise in "Rubber Chemistry and Technology", Vol. 85, Nr. 3, Seiten 408 bis 449 (2012), insbesondere auf den Seiten 438 und 440 und 442, beschrieben, durch thermische Zersetzung von organischen Materialien bei 550 bis 800 °C unter Ausschluss von Sauerstoff oder mittels Vakuumpyrolyse bei vergleichsweise niedrigen Temperaturen im Bereich von 500 °C erhalten.

Im Rahmen der vorliegenden Erfindung handelt es sich bei den organischen Materialien bevorzugt um Altreifen und/oder vulkanisierten Produktionsabfällen aus der Reifenherstellung und/oder vulkanisierten Schläuchen, d.h. anfallende Abfallprodukte, die entsorgt werden müssen. Die Pyrolyse und Gewinnung von Pyrolyse-Ruß daraus, der erfindungsgemäß wieder Reifenmischungen zugesetzt wird, stellt somit einen Recyclingprozess dar.

Ein derartiger Pyrolyse-Ruß unterscheidet sich von bekannten Rußen, wie Industrierußen, insbesondere den ASTM-Rußen wie N660, u.a. im höheren Aschegehalt und gleichzeitig geringerem Gehalt an polyzyklischen aromatischen Kohlenwasserstoffen (PAK), wie beispielsweise der Homepage der Firma BlackBear Carbon BV zu entnehmen ist, http://www.blackbearcarbon.com/rfp-international/.

Industrieruße weisen einen hohen Anteil an polyzyklischen aromatischen Kohlenwasserstoffen (PAK) auf. Industrieruße haben einen PAK-Gehalt von größer als 200 mg/kg.

Polyzyklische aromatische Kohlenwasserstoffe sind gesundheitsschädlich. In der GS-Spezifikation - Spezifikation gemäß § 21 Abs. 1 Nr. 3 ProdSG - sind bspw. einzuhaltende PAK-Höchstgehalte für Materialien von relevanten Kontakt-/Griff- und Betätigungsflächen kategorisiert.

Der PAK-Gehalt der eingesetzten Pyrolyse-Ruße beträgt bevorzugt weniger als 50 ppm (mg/kg), besonders bevorzugt weniger als 40 ppm, ganz besonders bevorzugt weniger als 30 ppm, wiederum bevorzugt weniger als 10 ppm. Die untere Grenze liegt im Bereich von 0,1 mg/kg, was die Nachweisgrenze von PAK darstellt. Grundsätzlich soll der PAK-Gehalt so gering wie möglich sein.

Der PAK-Gehalt wird gemäß ASTM D-5186 bestimmt.

Im Rahmen der vorliegenden Erfindung wird unter dem Ausdruck "Pyrolyse-Ruß, der mittels Pyrolyse aus Altreifen und/oder vulkanisierten Produktionsabfällen aus der Reifenherstellung und/oder vulkanisierten Schläuchen hergestellt wurde" alle dem Fachmann bekannten Pyrolyse-Ruße aus Altreifen und/oder vulkanisierten Produktionsabfällen aus der Reifenherstellung und/oder vulkanisierten Schläuchen verstanden, wobei die aufgeführten Ausführungsformen bevorzugt sind.

Im Rahmen der vorliegenden Erfindung wird unter dem Begriff "Industrieruße" die für Reifenmischungen bekannten Ruße, die keine Pyrolyse-Ruße sind, verstanden, die gemäß Römpp-Online-Lexikon © 2016 Georg Thieme Verlag KG (Stand 08.01.2016) üblicherweise einen Aschegehalt von weniger als 1 Gew.-% aufweisen und insbesondere sogenannte Furnace-Ruße, Gasruße oder Flammruße sind.

Überraschenderweise wird in der erfindungsgemäßen Kautschukmischung durch die Kombination von wenigstens einem Polyisopren mit einer vergleichsweise hohen Menge an Pyrolyse-Ruß eine Verbesserung der Haltbarkeit und Reißeigenschaften bei einer vergleichbaren Luftdichtigkeit erzielt. Hierdurch kann die gesamte Menge der im Stand der Technik bekannten in der Kautschukmischung für die Innenschicht enthaltenen Industrieruße, wie zum Beispiel N660, durch Pyrolyse-Ruß ausgetauscht werden.

Die für die Luftdichtigkeit sonst enthaltenen anorganische Füllstoffe, wie Kaolin oder vergleichbare Füllstoffe oder Calciumcarbonat, werden teilweise im durch Pyrolyse-Ruß ausgetauscht werden, wobei die Mischung hinsichtlich Kosten und Luftdichtigkeit sowie der sonstigen Eigenschaften optimiert ist.

Ein geeigneter Pyrolyse-Ruß kann beispielsweise von der Fa. BBC unter dem Handelsnamen BBC500 oder von der Fa. Pyrolyx AG unter dem Handelsnamen CB e 603 erhalten werden.

Der erfindungsgemäß enthaltene Pyrolyse-Ruß weist erfindungsgemäß einen Aschegehalt von 5 bis 30 Gew.-%, besonders bevorzugt 10 bis 30 Gew.-%, ganz besonders bevorzugt 10 bis 20 Gew.-%, auf. Gemäß einer bevorzugten Ausführungsform der Erfindung beträgt der Aschegehalt 15 bis 20 Gew.-%.

Der Aschegehalt bezieht sich nur auf den Pyrolyse-Ruß und wird mittels thermogravimetrischer Analyse (TGA) gemäß ASTM D1506 des Pyrolyse-Rußes bestimmt.

Mit einem derartigen Aschegehalt werden besonders gute physikalische Eigenschaften und eine besonders gute Luftdichtigkeit der erfindungsgemäßen Kautschukmischung bzw. des erfindungsgemäßen Fahrzeugluftreifens erzielt.

Der erfindungsgemäß enthaltene Pyrolyse-Ruß weist ferner bevorzugt einen Schwefel-Gehalt von größer als 1 Gew.-%, besonders bevorzugt größer als 2 Gew.-%, ganz besonders bevorzugt 2 bis 6 Gew.-%, wiederum ganz besonders bevorzugt 2 bis 4 Gew.-%, und wiederum ganz besonders bevorzugt 2,2 bis 4 Gew.-%, auf.

Mit einem derartigen Schwefelgehalt werden besonders gute physikalische Eigenschaften und eine besonders gute Luftdichtigkeit der erfindungsgemäßen Kautschukmischung bzw. des erfindungsgemäßen Fahrzeugluftreifens erzielt. Der Schwefelgehalt bezieht sich nur auf den Pyrolyse-Ruß und wird mittels ASTM D4239 des Pyrolyse-Rußes bestimmt.

Der erfindungsgemäß enthaltene Pyrolyse-Ruß weist ferner bevorzugt einen Kohlenstoffgehalt von 64 bis 87 Gew.-%, besonders bevorzugt 74 bis 87 Gew.-%, ganz besonders bevorzugt 78 bis 87 Gew.-%, auf.

Dem Fachmann ist bekannt, dass sich die Gewichtsanteile von Pyrolyse-Ruß aus enthaltener Asche, Schwefel und überwiegend (> 50 Gew.-%) Kohlenstoff zusammensetzen.

Der erfindungsgemäß enthaltene Pyrolyse-Ruß weist bevorzugt eine Jodadsorptionszahl gemäß ASTM D 1510 von 100 bis 130 g/kg und eine DBP-Zahl gemäß ASTM D 2414 von 50 bis 100 ml/100g, besonders bevorzugt 75 bis 95 ml/100g auf.

Der oder die enthaltenen Pyrolyse-Ruß(e) stellen den Hauptfüllstoff des erfindungsgemäß enthaltenen Füllstoffsystems dar, und zwar sind sie in Mengen von 50 bis 95 Gew.-% darin enthalten. Bevorzugt beträgt der Anteil 55 bis 95 Gew.-%, besonderes bevorzugt 60 bis 95 Gew.-%, bezogen auf die Gesamtmenge an enthaltenen Füllstoffen. Hierdurch wird die erfindungsgemäße Aufgabe hinsichtlich Nachhaltigkeit und Umweltfreundlichkeit besonders gut gelöst, wobei sich durch erhöhte Viskositäten (Mooney-Viskosität bei 100 °C) zudem eine Verbesserung im Fertigungsprozess ergibt. Die erfindungsgemäße Kautschukmischung lässt sich damit einfacher und kostengünstiger herstellen.

Im Füllstoffsystem sind ferner 5 bis 45 Gew.-%, bevorzugt 10 bis 45 Gew.-% , besonders bevorzugt 20 bis 45 Gew.-%, ganz besonders bevorzugt 25 bis 45 Gew.-%, wiederum bevorzugt 25 bis 40 Gew.-%, wiederum besonders bevorzugt 25 bis 35 Gew.-% wenigstens eines anorganischen Füllstoffs enthalten, wobei der anorganische Füllstoff ein inaktiver Füllstoff ist, der ausgewählt ist aus der Gruppe bestehend aus Calciumcarbonat oder plättchenförmigen Füllstoffen ausgewählt aus der Gruppe bestehend aus Talk und Kaolin, wobei auch ein Gemisch aus mehreren der genannten Füllstoffe denkbar ist. Hierdurch ist die Kautschukmischung hinsichtlich ökonomischen und ökologischen Aspekten optimiert bei einer gleichzeitig sehr guten Luftdichtigkeit und einer geringen Dichte.

Zu den anorganischen Füllstoffen zählen die oben aufgeführten inaktiven und aktiven Füllstoffe, solange das Füllstoffsystem 5 bis 45 Gew.-% wenigstens eines anorganischen Füllstoffs als Anteile an der Gesamtmenge an enthaltenen Füllstoffen enthält, wobei der anorganische Füllstoff ein inaktiver Füllstoff ist, der ausgewählt ist aus der Gruppe bestehend aus Calciumcarbonat oder plättchenförmigen Füllstoffen ausgewählt aus der Gruppe bestehend aus Talk und Kaolin, wobei auch ein Gemisch aus mehreren der genannten Füllstoffe denkbar ist.

Inaktive anorganische Füllstoffe sind insbesondere Füllstoffe wie Calciumcarbonat oder, wie im Stand der Technik bekannt, plättchenförmige Füllstoffe, wie Schichtsilikate und/oder Trockengemisch-Verbindungen, die wenigstens 25 Gew.-% zumindest einer delaminierten Alumohydrosilikat-Modifikation enthalten, wobei die delaminierte Alumohydrosilikat-Modifikation ein Zweischichtgitter aufweist. Derartige Füllstoffe sind in der WO 2010034592 A1 beschrieben.

Der plättchenförmige Füllstoff lässt sich durch die Form der Partikel beschreiben, wobei der so genannte aspect ratio bestimmt wird.

Es hat sich als vorteilhaft erwiesen, wenn der aspect ratio, d.h. das Verhältnis Länge zu Breite der Partikel (L / B), zwischen 1,0 bis 2,8, bevorzugt zwischen 1,0 bis 2,0 und besonders bevorzugt zwischen 1,2 bis 1,5, beträgt. Zur Ermittlung des aspect ratios wurden die Partikel mit Hilfe eines automatischen Bildanalyseverfahrens mit CCD-Detektor, Sysmex FPIA-3000 der Firma Malvern Instruments Ltd., vermessen. Für weitere Details bezüglich der Messanalytik sei an dieser Stelle auf die entsprechenden Datenblätter und Informationen des genannten Herstellers verwiesen, welche zum Teil auch auf dessen Homepage verfügbar sind.

Weiterhin beträgt der Schichtindex (lamellarity index) der delaminierten Alumohydrosilikat-Modifikation 2 bis 15, bevorzugt 2 bis 10, besonders bevorzugt 2 bis 5. Der Schichtindex ist ein Maß für die Morphologie, d. h. für den Grad der Delaminierung (Entblätterung der Schichten); bei gleicher Feinheit der delaminierten Alumohydrosilikat-Modifikation (bestimmt durch Laserbeugung) zeigt ein höherer Schichtindex eine höhere Struktur an. Der Schichtindex wird ermittelt durch folgende Formel ermittelt:

$$\text{Schichtindex} = \frac{(\text{Partikelgröße aus Laserbeugung}) - (\text{Partikelgröße aus Sedimentation})}{(\text{Partikelgröße aus Sedimentation})}$$

Für die Ermittlung der Partikelgröße durch Sedimentation wurde ein SediGraph 5100 Partikelgrößenmessgerät der Firma Micromeritics Instruments, Deutschland verwendet. Bevorzugt handelt es sich bei dem Schichtsilikat um Talk. Talk ist ein Magnesiumsilikat mit der Formel $Mg_3[(OH)_2/Si_4O_{10}]$, wie es beispielsweise dem Römpp-Online-Lexikon, © 2016 Georg Thieme Verlag KG (Stand 08.01.2016) zu entnehmen ist. Talk ist ein Dreischicht-Phyllosilikat.

Die Trockengemisch-Verbindung hat bevorzugt einen Wassergehalt von 0 bis 2%, bevorzugt von 0 bis 1%. Dieser Wassergehalt ist im Wesentlichen, aber nicht ausschließlich, auf das Vorhandensein von Kristallwasser zurückzuführen.

Das Zweischichtgitter der delaminierten Alumohydrosilikat-Modifikation ist bevorzugt ein dioktaedrisches Zweischichtgitter.

Bevorzugt ist es, wenn es sich bei der delaminierten Alumohydrosilikat-Modifikation um delaminiertes $Al_2[(OH)_4/Si_2O_5]$ handelt, was auch unter dem Namen Kaolinit bekannt ist. Bei der Trockengemisch-Verbindung kann es sich somit um ein Kaolin handeln.

In einer besonders bevorzugten Ausführungsform enthält die Trockengemisch-Verbindung zusätzlich wenigstens 40% eines di- oder trioktaedrischen Dreischichtsilikates aus der Gruppe der Phyllosilikate und/oder wenigstens 10% einer kristallinen Quarzmodifikation oder amorphen Quarz. Die Prozentangabe bezieht sich dabei auf das Gesamtgewicht der Trockengemisch-Verbindung.

Bezüglich der Klassifizierung der di-oder trioktaedrischen Dreischichtsilikate sei beispielhaft auf Matthes, Mineralogie, Springer-Lehrbuch, 3. Auflage, 1990, S. 129 ff, verwiesen.

Bei dem Calciumcarbonat ($CaCO_3$), wenn in der Mischung vorhanden, handelt es sich bevorzugt um Calcit oder Kreide, welche einen $CaCO_3$-Gehalt von mindestens 98 % aufweist.

Erfindungsgemäß ist der anorganische inaktive Füllstoff ausgewählt aus der Gruppe bestehend aus Calciumcarbonat oder plättchenförmigen Füllstoffen ausgewählt aus der Gruppe bestehend aus Talk und Kaolin, wobei auch ein Gemisch aus mehreren der genannten Füllstoffe denkbar ist.

Die Dichte gemäß dem Archimedes-Prinzip der erfindungsgemäßen Kautschukmischung beträgt bevorzugt weniger als 1,25 $g/cm^3$, besonders bevorzugt 1,1-1,24 $g/cm^3$. Die Dichte bezieht sich hierbei auf die vulkanisierte Kautschukmischung.

Ferner kann die Kautschukmischung 0 bis 45 Gew.-% wenigstens eines Industrierußes enthalten, wobei die Menge aller enthaltenen Füllstoffe nach erfindungsgemäßer Definition in jedem Fall 100 Gew.-% beträgt.

Somit kann auch ein Gemisch von Pyrolyse-Ruß mit wenigstens einem Industrieruß und wenigstens einem anorganischen Füllstoff verwendet werden.

Bevorzugte und bekannte Ruße, insbesondere für die Innenschicht von Fahrzeugluftreifen, sind insbesondere N660 und N550, mit einer DBP-Zahl gemäß ASTM D 2414 von 60 bis 130 ml/100g, bevorzugt 75 bis 95 ml/100g.

Die DBP-Zahl gemäß ASTM D 2414 bestimmt das spezifische Absorptionsvolumen eines Rußes mittels Dibutylphthalat. Ein geeigneter Ruß ist beispielsweise der Ruß N 660 mit einer Jodadsorptionszahl gemäß ASTM D 1510 von 36 g/kg und einer DBP-Zahl gemäß ASTM D 2414 von 90 ml/100g. Der Anteil an zusätzlich enthaltenem Ruß (Industrieruß) beträgt bevorzugt 0 bis 45 Gew.-% als Anteil an der Gesamtmenge an enthaltenen Füllstoffen, besonders bevorzugt 0 bis 25 Gew.-%.

Gemäß einer ganz besonders bevorzugten Ausführungsform der Erfindung beträgt der Anteil an Industrierußen 0 bis 0,5 Gew.-%, insbesondere idealerweise 0 Gew.-%. Durch Verunreinigungen an der Mischerwand oder andere produktionsbedingte Phänomene ist jedoch ein geringer Anteil von 0,5 Gew.-% Industrierußen in der beschriebenen Ausfiihrungsform der Kautschukmischung denkbar. Gemäß dieser besonders vorteilhaften Ausfiihrungsform der Erfindung enthält die Kautschukmischung 0 bis 0,1 phr, idealerweise 0 phr, an Industrierußen. Hiermit werden eine besonders gute Luftdichtigkeit und eine Optimierung hinsichtlich Umweltfreundlichkeit und Nachhaltigkeit erzielt.

Zudem entfällt die Zudosierung eines weiteren Füllstoffs, wodurch die Herstellung der erfindungsgemäßen Kautschukmischung einfacher ist.

Die Menge des enthaltenen Pyrolyse-Rußes bezogen auf den Kautschuk beträgt bevorzugt 40 bis 200 phr, besonders bevorzugt 40 bis 100 phr, ganz besonders bevorzugt 40 bis 95 phr.

Mit einer derartigen Menge bezogen auf die Gesamtmenge an Kautschuken ergibt sich ein gutes Füllstoffmengenniveau, wobei hiermit insbesondere der Zielkonflikt aus Verarbeitbarkeit (z. B. Viskosität nicht zu hoch) und Luftdichtigkeit bei gleichzeitig gutem Eigenschaftsbild gut ausbalanciert ist.

Gemäß einer besonders bevorzugten Ausführungsform der Erfindung beträgt die Menge an enthaltenem Pyrolyse-Ruß 40 bis 80 phr, wobei sich insbesondere die genannten Vorteile ergeben.

Gemäß einer weiteren bevorzugten Ausführungsform der Erfindung enthält die Kautschukmischung 40 bis 60 phr, wenigstens eines Pyrolyse-Rußes. Hierdurch ergibt sich eine weitere Verbesserung der physikalischen Eigenschaften bei vergleichbarer Luftdichtigkeit.

Es ist bei allen Ausführungsformen auch ein Gemisch verschiedener Pyrolyse-Ruße denkbar, wobei die angegebenen Mengen sich immer auf die Gesamtmenge an enthaltenen Pyrolyse-Rußen beziehen.

Die Menge des anorganischen Füllstoffs beträgt bevorzugt 2 bis 35 phr, besonders bevorzugt 5 bis 25 phr, ganz besonders bevorzugt 10 bis 20 phr.

Es ist wie oben aufgeführt denkbar, dass die Kautschukmischung wenigstens eine Kieselsäure als anorganischen aktiven Füllstoff enthält, wobei das Füllstoffsystem 5 bis 45 Gew.-% wenigstens eines anorganischen Füllstoffs als Anteile an der Gesamtmenge an enthaltenen Füllstoffen enthält, wobei der anorganische Füllstoff ein inaktiver Füllstoff ist, der ausgewählt ist aus der Gruppe bestehend aus Calciumcarbonat oder plättchenförmigen Füllstoffen ausgewählt aus der Gruppe bestehend aus Talk und Kaolin, wobei auch ein Gemisch aus mehreren der genannten Füllstoffe denkbar ist.

Bei der Kieselsäure kann es sich um die dem Fachmann bekannten Kieselsäuretypen, die als Füllstoff für Reifenkautschukmischungen geeignet sind, handeln. Besonders bevorzugt ist es allerdings, wenn eine fein verteilte, gefällte Kieselsäure verwendet wird, die eine Stickstoff-Oberfläche (BET-Oberfläche) (gemäß DIN ISO 9277 und DIN 66132) von 35 bis 350 m$^2$/g, bevorzugt von 35 bis 260 m$^2$/g, besonders bevorzugt von 100 bis 260 m$^2$/g und ganz besonders bevorzugt von 130 bis 235 m$^2$/g, und eine CTAB-Oberfläche (gemäß ASTM D 3765) von 30 bis 400 m$^2$/g, bevorzugt von 30 bis 250 m$^2$/g, besonders bevorzugt von 100 bis 250 m$^2$/g und ganz besonders bevorzugt von 110 bis 230 m$^2$/g, aufweist. Derartige Kieselsäuren führen zu Vorteilen in der Mischungsverarbeitung durch eine Verringerung der Mischzeit bei gleichbleibenden Produkteigenschaften ergeben, die zu einer verbesserten Produktivität führen. Als Kieselsäuren können somit z. B. sowohl jene des Typs Ultrasil® VN3 (Handelsname) der Firma Evonik als auch hoch dispergierbare Kieselsäuren, so genannte HD-Kieselsäuren (z.B. Zeosil® 1165 MP der Firma Rhodia), zum Einsatz kommen.

Die erfindungsgemäße Kautschukmischung kann bevorzugt möglichst geringe Mengen d.h. bevorzugt 0 bis 10 phr, besonders bevorzugt 0 bis 2 phr, weitere Füllstoffe enthalten. Zu den weiteren (nicht verstärkenden) Füllstoffen zählen im Rahmen der vorliegenden Erfindung Stärke, Magnesiumoxid, Titandioxid oder Kautschukgele sowie Fasern (wie zum Beispiel Aramidfasern, Glasfasern, Carbonfasern, Cellulosefasern).

Weitere ggf. verstärkende Füllstoffe sind z.B. Kohlenstoffnanoröhrchen (carbon nanotubes (CNT) inklusive diskreter CNTs, sogenannte hollow carbon fibers (HCF) und modifizierte CNT enthaltend eine oder mehrere funktionelle Gruppen, wie Hydroxy-, Carboxy und Carbonyl-Gruppen), Graphit und Graphene und sogenannte "carbon-silica dual-phase filler". Die genannten Füllstoffe zählen alle zu dem Füllstoffsystem, wobei das Füllstoffsystem 5 bis 45 Gew.-% wenigstens eines anorganischen Füllstoffs als Anteile an der Gesamtmenge an enthaltenen Füllstoffen enthält, wobei der anorganische Füllstoff ein inaktiver Füllstoff ist, der ausgewählt ist aus der Gruppe bestehend aus Calciumcarbonat oder plättchenförmigen Füllstoffen ausgewählt aus der Gruppe bestehend aus Talk und Kaolin, wobei auch ein Gemisch aus mehreren der genannten Füllstoffe denkbar ist.

Zinkoxid gehört im Rahmen der vorliegenden Erfindung nicht zu den Füllstoffen.

Falls in der Kautschukmischung zumindest eine Kieselsäure enthalten ist, ist zudem bevorzugt wenigstens ein Kupplungsagens, in Form von Silan oder einer siliziumorganischen Verbindung, enthalten. Hierbei können ein oder mehrere verschiedene Silan-Kupplungsagenzien in Kombination miteinander eingesetzt werden. Die Kautschukmischung kann somit ein Gemisch verschiedener Silane enthalten.

Die Silan-Kupplungsagenzien reagieren mit den oberflächlichen Silanolgruppen der Kieselsäure oder anderen polaren Gruppen während des Mischens des Kautschuks bzw. der Kautschukmischung (in situ) oder bereits vor der Zugabe des Füllstoffes zum Kautschuk im Sinne einer Vorbehandlung (Vormodifizierung). Als Silan-Kupplungsagenzien können dabei alle dem Fachmann für die Verwendung in Kautschukmischungen bekannten Silan-Kupplungsagenzien verwendet werden. Weiterhin kann die Kautschukmischung weitere Aktivatoren und/oder Agenzien für die Anbindung von Füllstoffen, insbesondere Ruß, enthalten. Hierbei kann es sich beispielsweise um die z.B. in der EP 2589619 A1 offenbarte Verbindung S-(3-Aminopropyl)Thioschwefelsäure und/oder deren Metallsalze handeln, wodurch sich insbesondere bei der Kombination mit wenigstens einem Ruß als Füllstoff sehr gute physikalische Eigenschaften der Kautschukmischung ergeben.

Es können in der Kautschukmischung noch 0 bis 100 phr, bevorzugt 0,1 bis 70 phr, bevorzugt 0,1 bis 30 phr, zumindest eines Weichmachers vorhanden sein.

Hierzu gehören alle dem Fachmann bekannten Weichmacher wie aromatische, naphthenische oder paraffinische Mineralölweichmacher, z.B. MES (mild extraction solvate) oder RAE (Residual Aromatic Extract) oder TDAE (treated distillate aromatic extract), oder Rubber-to-Liquid-Öle (RTL) oder Biomass-to-Liquid-Öle (BTL) bevorzugt mit einem Gehalt an polyzyklischen Aromaten von weniger als 3 Gew.-% gemäß Methode IP 346 oder Faktisse oder Weichmacherharze oder Flüssig-Polymere, deren mittleres Molekulargewicht (Bestimmung per GPC = gel permeation chromatography, in Anlehnung an BS ISO 11344:2004) zwischen 500 und 20000 g/mol liegt. Werden in der erfindungsgemäßen Kautschukmischung Flüssig-Polymere als Weichmacher eingesetzt, so gehen diese nicht als Kautschuk in die Berechnung der Zusammensetzung der Polymermatrix ein.

Der Weichmacher ist bevorzugt ausgewählt aus der Gruppe bestehend aus den oben genannten Weichmachern.

Mineralöle sind als Weichmacher besonders bevorzugt.

Bei der Verwendung von Mineralöl ist dieses bevorzugt ausgewählt aus der Gruppe, bestehend aus DAE (Destillated Aromatic Extracts) und/oder RAE (Residual Aromatic Extract) und/oder TDAE (Treated Destillated Aromatic Extracts) und/oder MES (Mild Extracted Solvents) und/oder naphthenische Öle.

Des Weiteren kann die erfindungsgemäße Kautschukmischung übliche Zusatzstoffe in üblichen Gewichtsteilen enthalten. Zu diesen Zusatzstoffen zählen

a) Alterungsschutzmittel, wie z. B. N-Phenyl-N'-(1,3-dimethylbutyl)-p-phenylendiamin (6PPD), N,N'-Diphenyl-p-phenylendiamin (DPPD), N,N'-Ditolyl-p-phenylendiamin (DTPD), N-Isopropyl-N'-phenyl-p-phenylendiamin (IPPD), 2,2,4-Trimethyl-1,2-dihydrochinolin (TMQ),

b) Aktivatoren, wie z. B. Zinkoxid und Fettsäuren (z. B. Stearinsäure),

c) Wachse,

d) Harze, insbesondere Klebharze, die keine Weichmacherharze sind,

e) Mastikationshilfsmittel, wie z. B. 2,2'-Dibenzamidodiphenyldisulfid (DBD und

f) Verarbeitungshilfsmittel, wie z.B. Fettsäuresalze, wie z.B. Zinkseifen, und Fettsäureester und deren Derivate.

Insbesondere bei der Verwendung der erfindungsgemäßen Kautschukmischung für die inneren Bauteile eines Reifens oder eines technischen Gummiartikels, welche direkten Kontakt zu vorhandenen Festigkeitsträgern haben, wird der Kautschukmischung in der Regel noch ein geeignetes Haftsystem, oft in Form von Klebharzen, zugefügt.

Der Mengenanteil der Gesamtmenge an weiteren Zusatzstoffen beträgt 3 bis 150 phr, bevorzugt 3 bis 100 phr und besonders bevorzugt 5 bis 80 phr.

Im Gesamtmengenanteil der weiteren Zusatzstoffe finden sich noch 0,1 bis 10 phr, bevorzugt 0,2 bis 8 phr, besonders bevorzugt 0,2 bis 4 phr, Zinkoxid (ZnO).

Hierbei kann es sich um alle dem Fachmann bekannten Typen an Zinkoxid handeln, wie z.B. ZnO-Granulat oder -Pulver. Das herkömmlicherweise verwendete Zinkoxid weist in der Regel eine BET-Oberfläche von weniger als 10 $m^2/g$ auf. Es kann aber auch ein Zinkoxid mit einer BET-Oberfläche von 10 bis 100 $m^2/g$, wie z.B. so genannte "nano-Zinkoxide", verwendet werden.

Es ist üblich, einer Kautschukmischung für die Schwefelvernetzung mit Vulkanisationsbeschleunigern Zinkoxid als Aktivator meist in Kombination mit Fettsäuren (z. B. Stearinsäure) zuzusetzen. Der Schwefel wird dann durch Komplexbildung für die Vulkanisation aktiviert.

Die Vulkanisation wird ggf. in Anwesenheit von Schwefel und/oder Schwefelspendern und mit Hilfe von Vulkanisationsbeschleunigern durchgeführt, wobei einige Vulkanisationsbeschleuniger zugleich als Schwefelspender wirken können und Schwefel und/oder Schwefelspender sowie Vulkanisationsbeschleuniger in den im Stand der Technik bekannten Mengen eingesetzt werden.

Schwefel und/oder Schwefelspender sowie ein oder mehrere Beschleuniger werden im letzten Mischungsschritt in den genannten Mengen der Kautschukmischung zugesetzt.

Dabei ist der Beschleuniger ausgewählt aus der Gruppe bestehend aus Thiazolbeschleunigern und/oder Mercaptobeschleunigern und/oder Sulfenamidbeschleunigern und/oder Thiocarbamatbeschleunigern und/oder Thiurambeschleunigern und/oder Thiophosphatbeschleunigern und/oder Thioharnstoffbeschleunigern und/oder Xanthogenat-Beschleunigern und/oder Guanidin-Beschleunigern.

Bevorzugt ist die Verwendung wenigstens eines Sulfenamidbeschleunigers, der ausgewählt ist aus der Gruppe bestehend aus N-Cyclohexyl-2-benzothiazolsufenamid (CBS) und/oder N,N-Dicyclohexylbenzothiazol-2-sulfenamid (DCBS) und/oder Benzothiazyl-2-sulfenmorpholid (MBS) und/oder 2,2'-Dibenzothiazyldisulfid (MBTS) und/oder N-tert.Butyl-2-benzothiazylsulfenamid (TBBS).

Auch weitere netzwerkbildende Systeme, wie sie beispielsweise unter den Handelsnamen Vulkuren®, Duralink® oder Perkalink® erhältlich sind, oder netzwerkbildende Systeme, wie sie in der WO 2010/049216 A2 beschrieben sind, können in der Kautschukmischung eingesetzt werden. Dieses System enthält ein Vulkanisationsmittel, welches mit einer Funktionalität größer vier vernetzt und zumindest einen Vulkanisationsbeschleuniger. Das Vulkanisationsmittel, welches mit einer Funktionalität von größer vier vernetzt hat beispielsweise die allgemeine Formel (1):

$$(1) \qquad G[C_aH_{2a}\text{-}CH_2\text{-}S_bY]_c$$

wobei G eine polyvalente cyclische Kohlenwasserstoffgruppe und/oder eine polyvalente Heterokohlenwasserstoffgruppe und/oder eine polyvalente Siloxangruppe ist, die 1 bis 100 Atome enthält; wobei jedes Y unabhängig ausgewählt aus einer kautschukaktiven Gruppe, Schwefel-enthaltende Funktionalitäten enthält; und wobei a, b und c ganze Zahlen sind, für die unabhängig gilt: a gleich 0 bis 6; b gleich 0 bis 8; und c gleich 3 bis 5.

Die kautschukaktive Gruppe ist bevorzugt ausgewählt ist aus einer Thiosulfonatgruppe, einer Dithiocarbamatgruppe, einer Thiocarbonylgruppe, einer Mercaptogruppe, einer Kohlenwasserstoffgruppe und einer Natriumthiosulfonatgruppe (Bunte-Salzgruppe).

Außerdem können in der Kautschukmischung Vulkanisationsverzögerer vorhanden sein.

Die Herstellung der erfindungsgemäßen Kautschukmischung erfolgt nach dem in der Kautschukindustrie üblichen Verfahren, bei dem zunächst in ein oder mehreren Mischstufen eine Grundmischung mit allen Bestandteilen außer dem Vulkanisationssystem (Schwefel und vulkanisationsbeeinflussende Substanzen) hergestellt wird. Durch Zugabe des Vulkanisationssystems in einer letzten Mischstufe wird die Fertigmischung erzeugt, wobei Substanzen, die auch eine vulkanisationsverzögernde Wirkung haben, wie MBTS, auch in einer der Grundmischstufen zugegeben werden können. Die Fertigmischung wird z.B. durch einen Extrusions- oder Kalandriervorgang weiterverarbeitet und in die entsprechende Form gebracht. Dem Fachmann sind allgemein Verfahren zur Herstellung von Fahrzeugreifen, insbesondere der Innenschicht von schlauchlosen Reifen und Schläuchen von Schlauchreifen, bekannt.

Die Erfindung soll nun anhand von Vergleichs- und Ausführungsbeispielen, die in Tabelle 1 zusammengefasst sind, näher erläutert werden. Die mit "E" gekennzeichneten Mischungen sind hierbei erfindungsgemäße Mischungen, während es sich bei den mit "V" gekennzeichneten Mischungen um Vergleichsmischungen handelt.

Die unter V1 angegebenen Werte sind somit Werte einer Vergleichsmischung aus dem Stand der Technik. Bei sämtlichen in der Tabelle enthaltenen Mischungsbeispielen sind die angegebenen Mengenangaben Gewichtsteile, die auf 100 Gewichtsteile Gesamtkautschuk bezogen sind (phr). Die Menge des Pyrolyse-Rußes ist zusätzlich in Gew.-% bezogen auf das Füllstoffsystem als Anteil an der Gesamtmenge an enthaltenen Füllstoffen (Gew.-% des FSS) angegeben.

Die Mischungsherstellung erfolgte unter üblichen Bedingungen in zwei Stufen in einem Labortangentialmischer. Aus sämtlichen Mischungen wurden Prüfkörper durch Vulkanisation hergestellt und mit diesen Prüfkörpern für die Kautschukindustrie typische Materialeigenschaften bestimmt. Für die obig beschriebenen Tests an Prüfkörpern wurden folgende Testverfahren angewandt:

- Mooney-Viskosität gemäß ASTM D1646; ML1+4 bei 100 °C (Mooney-Einheiten M.E.)
- Umsatzzeiten von 10% Umsatz ($t_{10}$ Anvulkanisationszeit) und 90% Umsatz ($t_{90}$, Ausvulkanisationszeit) mittels rotorlosem Vulkameter (MDR = Moving Disc Rheometer) sowie Differenz aus Maximalwert MHF und Minimalwert ML der Rheometerkurven gemäß DIN 53 529
- Shore-A-Härte bei Raumtemperatur (RT) und 70 °C gemäß DIN ISO 7619-1
- Rückprallelastizität bei Raumtemperatur gemäß DIN 53 512
- Zugfestigkeit, Bruchdehnung und Spannungswert bei 300% (Modul 300) statischer Dehnung bei Raumtemperatur gemäß DIN 53 504
- Luftpermeabilität gemäß DIN 53 536 bei 70 °C Lufttemperatur
- Dichte (der vulkanisierten Mischungen) gemäß Archimedes-Prinzip

Verwendete Substanzen

a) Kaolin: Kaolin W, Fa. Erbsloeh Lohrheim GmbH
b) Ruß: N774, DBP-Zahl = 70 ml/100g ; Aschegehalt = max. 0,5 Gew.%?, PAK-Gehalt > 200 mg/kg.
c) Pyrolyse-Ruß: DBP-Zahl = 90 ml/100 g, Jodzahl = 115 g/kg, Aschegehalt = 18,4 Gew.-%, Schwefelgehalt = 2,4 Gew.-%, PAK-Gehalt < 5 mg/kg.
d) Sonstige Zusatzstoffe: Weichmacher, Zinkoxid, Stearinsäure, Schwefel, Beschleuniger CBS
e) Calciumcarbonat Whiting (Calciumcarbonat: Calcit, Calcitwerk Schön + Hippelein GmbH & Co. KG)

Wie Tabelle 1 zu entnehmen ist, zeigen die erfindungsgemäßen Kautschukmischungen E1 und E2 im Vergleich zu V1 bei Austausch der gesamten Menge an herkömmlichem Ruß (Industrieruß) und einer Reduktion des enthaltenen anorganischen inaktiven plättchenförmigen Füllstoffs Kaolin erhöhte Mooney-Viskositäten, was im Fertigungsprozess in dem Zahlenbereich von Vorteil ist. Dabei bleiben die Vulkanisationszeiten $t_{10}$ und $t_{90}$ auf einem vergleichbaren Niveau. Gleichzeitig zeigen die Kautschukmischungen E1und E2 eine geringe, und damit sehr gute Gaspermeabilität, wodurch sie eine ausgezeichnete Luftdichtigkeit aufweisen und eine geringere Dichte als V1.

Zudem bleiben die sonstigen Eigenschaften, wie insbesondere Zugfestigkeit und die Steifigkeiten sowie die Härte, auf einem vergleichbaren Niveau.

Wie Tabelle 2 zu entnehmen ist, kann mit der erfindungsgemäßen Mischung E3 ggü. V2 auch die gesamte Menge an Industrieruß (N 660) und ein Teil der Menge an Calciumcarbonat durch Pyrolyse-Ruß ersetzt werden, wodurch sich eine optimierte Luftdichtigkeit ergibt. Die üblichen Prozessschwierigkeiten mit Calciumcarbonat (Blasenbildung z. B.) sind stark reduziert.

Die Vulkanisationszeiten $t_{10}$ und $t_{90}$ bleiben auf einem vergleichbaren Niveau.

E3 zeigt gegenüber V2 und V3 erhöhte Mooney-Viskositäten, was im Fertigungsprozess in dem Zahlenbereich von Vorteil ist.

Die geringere Härte der erfindungsgemäßen Mischungen E1, E2 sowie E3 gegenüber den Vergleichsmischungen V1 sowie V2 ist insbesondere für die Anwendung im Schlauch vorteilhaft.

Ein Fahrzeugluftreifen, der die erfindungsgemäß Kautschukmischung in der Innenschicht oder im Schlauch enthält, weist aufgrund des physikalischen Eigenschaftsbildes eine sehr gute Haltbarkeit auf und ist hinsichtlich Nachhaltigkeit und Umweltfreundlichkeit optimiert sowie einfacher und kostengünstiger herstellbar bei einer vergleichbaren Luftdichtigkeit.

Tabelle 1

| Bestandteile | Einheit | V1 | E1 | E2 |
|---|---|---|---|---|
| Naturkautschuk | phr | 100 | 100 | 100 |
| Kaolin [b)] | phr | 40 | 30 | 20 |
| Ruß[c)] | phr | 45 | - | - |
| Pyrolyse-Ruß [c)] | phr | - | 45 | 45 |
| (Pyrolyse-Ruß | Gew.-% des FSS | 0 | 60 | 69,2) |
| Sonst. Zusatzstoffe[d)] | phr | 13 | 13 | 13 |
| | | | | |
| Eigenschaften | | | | |
| Mooney (ML1+4) 100 °C | M. E. | 61 | 74 | 72 |
| $t_{10}$ | Min. | 2,9 | 2,5 | 2,4 |
| $t_{90}$ | Min. | 5,4 | 5,4 | 5,2 |
| Gaspermeabilität | $10E-17*m^2/(Pa*sec)$ | 25,9 | 25,6 | 27,6 |
| Dichte | $g/cm^3$ | 1,248 | 1,209 | 1,179 |
| Zugfestigkeit | MPa | 17,2 | 17,7 | 17,1 |
| Bruchdehnung | % | 441 | 492 | 489 |
| Modul 300 | MPa | 11,7 | 9,5 | 9 |
| Shore Härte b. RT | Shore A | 59,4 | 54,3 | 53,6 |
| Shore Härte 70 °C | Shore A | 56,6 | 52 | 51,4 |
| Rückprallelastizität RT | % | 58,4 | 57,5 | 58,9 |

Tabelle 2

| Bestandteile | Einheit | V2 | E3 | V3 |
|---|---|---|---|---|
| Naturkautschuk | phr | 100 | 100 | 100 |
| $CaCO_3$[e)] | phr | 50 | 25 | - |
| Ruß N 660 | phr | 55 | - | - |
| Pyrolyse-Ruß [d)] | phr | - | 55 | 55 |
| (Pyrolyse-Ruß | Gew.-% des FSS | 0 | 68,8 | 100 |
| Sonst. Zusatzstoffe [d)] | phr | 13 | 13 | 13 |
| | | | | |
| Eigenschaften | | | | |
| Mooney (ML1+4) 100 °C | M. E. | 70 | 82 | 75 |
| $t_{10}$ | Min. | 2,4 | 2,4 | 2,4 |
| $t_{90}$ | Min. | 4,7 | 5 | 5,1 |
| Gaspermeabilität | $10E-17*m^2/(Pa*sec)$ | 31,8 | 28,5 | 30,1 |
| Dichte | $g/cm^3$ | 1,278 | 1,223 | 1,127 |
| Bruchdehnung | % | 379 | 442 | 508 |
| Modul 300 | MPa | 11,1 | 9,8 | 9,6 |

(fortgesetzt)

| Eigenschaften | | | | |
|---|---|---|---|---|
| Shore Härte b. RT | Shore A | 61,4 | 57,6 | 52,8 |
| Shore Härte 70 °C | Shore A | 58,5 | 55 | 50,8 |
| Rückprallelastizität RT | % | 56,2 | 55,1 | 58,5 |

**Patentansprüche**

1. Kautschukmischung für die Innenschicht oder den Schlauch von Fahrzeugluftreifen, die folgende Bestandteile enthält:

   - wenigstens 50 phr wenigstens eines Polyisoprens, welches ausgewählt ist aus natürlichem und synthetischem Polyisopren; und
   - ein Füllstoffsystem mit 50 bis 95 Gew.-% wenigstens eines Pyrolyse-Rußes und 5 bis 45 Gew.-% wenigstens eines anorganischen Füllstoffs als Anteile an der Gesamtmenge an enthaltenen Füllstoffen, wobei der Pyrolyse-Ruß einen Aschegehalt von 5 bis 30 Gew.-% aufweist, und wobei der anorganische Füllstoff ein inaktiver Füllstoff ist, der ausgewählt ist aus der Gruppe bestehend aus Calciumcarbonat oder plättchenförmigen Füllstoffen ausgewählt aus der Gruppe bestehend aus Talk und Kaolin, wobei auch ein Gemisch aus mehreren der genannten Füllstoffe denkbar ist;

   und wobei die Kautschukmischung frei ist von Butyl-Kautschuk und frei ist von Halobutyl-Kautschuk.

2. Kautschukmischung nach Anspruch 1, **dadurch gekennzeichnet, dass** der Pyrolyse-Ruß einen Schwefelgehalt von größer als 1 Gew.-% aufweist.

3. Kautschukmischung nach einem der vorherigen Ansprüche, **dadurch gekennzeichnet, dass** die Menge des enthaltenen Pyrolyse-Rußes 40 bis 95 phr beträgt.

4. Kautschukmischung nach einem der vorherigen Ansprüche, **dadurch gekennzeichnet, dass** sie 65 bis 100 phr wenigstens eines Polyisoprens enthält.

5. Kautschukmischung nach einem der vorherigen Ansprüche, **dadurch gekennzeichnet, dass** sie 0 Gew.-% bezogen auf die Gesamtmenge an enthaltenen Füllstoffen an Industrierußen enthält.

6. Fahrzeugluftreifen, der wenigstens eine Kautschukmischung nach einem der Ansprüche 1 bis 5 aufweist.

7. Fahrzeugluftreifen nach Anspruch 6, wobei es sich um einen schlauchlosen Fahrzeugluftreifen handelt und er die Kautschukmischung wenigstens in der Innenschicht aufweist.

8. Fahrzeugluftreifen nach Anspruch 6, wobei es sich um einen Schlauchreifen handelt und er die Kautschukmischung wenigstens Schlauch aufweist.

9. Schlauch zur Verwendung in einem Schlauchreifen, wobei er wenigstens eine Kautschukmischung nach einem der Ansprüche 1 bis 5 enthält.

**Claims**

1. Rubber mixture for the inner layer or the tube of pneumatic vehicle tyres which contains the following constituents:

   - at least 50 phr of at least one polyisoprene selected from natural and synthetic polyisoprene; and
   - a filler system comprising 50% to 95% by weight of at least one pyrolytic carbon black and 5% to 45% by weight of at least one inorganic filler as proportions of the total amount of fillers present, wherein the pyrolytic carbon black has an ash content of 5% to 30% by weight and wherein the inorganic filler is an inactive filler selected from the group consisting of calcium carbonate or platelet-shaped fillers selected from the group consisting of talc and kaolin, wherein a mixture of several of the cited fillers is also conceivable;

and wherein the rubber mixture is free from butyl rubber and is free from halobutyl rubber.

2. Rubber mixture according to Claim 1, **characterized in that** the pyrolytic carbon black has a sulfur content of more than 1% by weight.

3. Rubber mixture according to any of the preceding claims, **characterized in that** the amount of the pyrolytic carbon black present is 40 to 95 phr.

4. Rubber mixture according to any of the preceding claims, **characterized in that** it contains 65 to 100 phr of at least one polyisoprene.

5. Rubber mixture according to any of the preceding claims, **characterized in that** it contains 0% by weight, based on the total amount of fillers present, of industrial carbon blacks.

6. Pneumatic vehicle tyre comprising at least one rubber mixture according to any of Claims 1 to 5.

7. Pneumatic vehicle tyre according to Claim 6, wherein said tyre is a tubeless pneumatic vehicle tyre and it comprises the rubber mixture at least in the inner layer.

8. Pneumatic vehicle tyre according to Claim 6, wherein said tyre is a tubed tyre and it comprises the rubber mixture at least in the tube.

9. Tube for use in a tubed tyre, wherein said tube contains at least one rubber mixture according to any of Claims 1 to 5.


**Revendications**

1. Mélange de caoutchouc pour la couche intérieure ou la chambre à air de pneus de véhicule, qui contient les constituants suivants :

   - au moins 50 pce d'au moins un polyisoprène, qui est choisi parmi le polyisoprène naturel et synthétique ; et
   - un système de charge contenant 50 à 95 % en poids d'au moins un noir de carbone de pyrolyse et 5 à 45 % en poids d'au moins une charge inorganique en tant que proportions de la quantité totale de charges contenues, le noir de carbone de pyrolyse présentant une teneur en cendres de 5 à 30 % en poids, et la charge inorganique étant une charge inactive, qui est choisie dans le groupe constitué par le carbonate de calcium ou les charges plaquettaires choisies dans le groupe constitué par le talc et le kaolin, un mélange de plusieurs des charges mentionnées étant également envisageable ;

   et le mélange de caoutchouc étant exempt de caoutchouc de butyle et étant exempt de caoutchouc d'halobutyle.

2. Mélange de caoutchouc selon la revendication 1, **caractérisé en ce que** le noir de carbone de pyrolyse présente une teneur en soufre de plus de 1 % en poids.

3. Mélange de caoutchouc selon l'une quelconque des revendications précédentes, **caractérisé en ce que** la quantité du noir de carbone de pyrolyse contenu est de 40 à 95 pce.

4. Mélange de caoutchouc selon l'une quelconque des revendications précédentes, **caractérisé en ce qu'**il contient 65 à 100 pce d'au moins un polyisoprène.

5. Mélange de caoutchouc selon l'une quelconque des revendications précédentes, **caractérisé en ce qu'**il contient 0 % en poids, par rapport à la quantité totale de charges contenues, de noirs de carbone industriels.

6. Pneu de véhicule, qui comprend au moins un mélange de caoutchouc selon l'une quelconque des revendications 1 à 5.

**7.** Pneu de véhicule selon la revendication 6, celui-ci consistant en un pneu de véhicule sans chambre à air et celui-ci comprenant le mélange de caoutchouc au moins dans la couche intérieure.

**8.** Pneu de véhicule selon la revendication 6, celui-ci consistant en un pneu à chambre à air et celui-ci comprenant le mélange de caoutchouc au moins dans la chambre à air.

**9.** Chambre à air destinée à une utilisation dans un pneu à chambre à air, celle-ci contenant au moins un mélange de caoutchouc selon l'une quelconque des revendications 1 à 5.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2010034592 A1
- US 20130281581 A1
- CN 103772779 A
- US 20100249353 A1
- EP 2589619 A1
- WO 2010049216 A2

**In der Beschreibung aufgeführte Nicht-Patentliteratur**

- *Rubber Chemistry and Technology,* 2012, vol. 85 (3), 408-449
- **MATTHES.** Mineralogie, Springer-Lehrbuch. 1990, 129 ff